# EUROPEAN PATENT APPLICATION

(11) **EP 4 825 763 A1**
(43) Date of publication of application: **21.10.2026**
(21) Application number: 26171847.2
(22) Date of filing: 13.04.2026
(51) Int. Cl.: B65G 47/14, B23Q 7/00, B65G 1/04

(54) **LOADING AND SINGULARIZING SYSTEM FOR THE CONTROLLED SEPARATION OF ELONGATED PIECES**

(30) Priority: 17.04.2025 IT 202500008661
(71) Applicant: Adige S.p.A., 38056 Levico Terme (TN) (IT)
(72) Inventor: SEGALLA, Enrico, 38057 Pergine Valsugana (Trento) (IT); CASAGRANDA, Marco, 38043 Bedollo (Trento) (IT); TRENTIN, Edoardo, 38050 Scurelle (Trento) (IT)
(74) Representative: Vanzini, Christian

(57) **Abstract**

A loading and singularizing system for the controlled separation of elongated pieces, comprising: an oscillating structure (12) supported by a support structure (11), a containment cradle (13) and a lifter (14) carried by the oscillating structure (12), a conveying plane (15) carried by the oscillating structure (12) and having an end (15a) adjacent to an upper edge (13c') of the containment cradle (13). The oscillating structure (12) is rotatable between a vertical position, in which the conveying plane (15) is arranged horizontally, and a forwardly inclined position, in which the conveying plane (15) is inclined and arranged below the upper edge (13c') of the containment cradle (13). The oscillating structure (12) is further rotatable between the vertical position and a rearwardly inclined position, in which the conveying plane (15) is inclined and arranged above the upper edge (13c') of the containment cradle (13).

## Description

The present invention relates to the field of machines for processing elongated workpieces, such as tubes, profiles, or bars. In particular, the invention relates to a loading and singularizing system for the controlled separation of elongated pieces.

Singularizing systems for the controlled separation of elongated workpieces are known, which comprise an oscillating structure for transferring the elongated workpieces from a magazine to a processing machine.

It is an object of the present invention is to improve the prior art. In particular, it is necessary to develop a loading and singularizing system which is capable of handling a wide variety of elongated pieces, in terms of size (larger or smaller cross-sections), cross-section shape (e.g., circular or rectangular section, solid or hollow section, open or closed section), and materials (e.g., steel or aluminum).

This and other objects are fully achieved according to the present invention by virtue of a loading and singularizing system having the features specified in the appended independent claim 1.

Advantageous embodiments of the invention are the object of the dependent claims, the contents of which are intended to form an integral part of the following description.

In brief, the invention is based on the idea of providing a loading and singularizing system for the controlled separation of elongated pieces, the system comprising
a support structure,
an oscillating structure supported by the support structure and capable of rotating with respect to it,
a containment cradle and a lifter carried by the oscillating structure, the containment cradle being configured to receive a plurality of elongated pieces, and the lifter being configured to lift the elongated pieces contained in the containment cradle, and
a conveying plane carried by the oscillating structure and having an end adjacent to an upper edge of the containment cradle,
wherein the oscillating structure is rotatable between a vertical position, in which the conveying plane is arranged horizontally, and a forwardly inclined position, in which the conveying plane is inclined and arranged below the upper edge of the containment cradle,
wherein the oscillating structure is further rotatable between the vertical position and a rearwardly inclined position, in which the conveying plane is inclined and arranged above the upper edge of the containment cradle,
wherein the oscillating structure can be positioned in a plurality of said forwardly inclined positions and in a plurality of said rearwardly inclined positions by means of an actuating mechanism.

By virtue of such a system, it is possible to achieve an oscillating structure with a wide angular stroke between the rearwardly inclined position and the forwardly inclined position, e.g., between -20° (and beyond) and +60° (and beyond). By virtue of this wide angular stroke, it is possible to manage the transfer of elongated pieces having different features, e.g., by adjusting the forward inclination angle of the tilting structure, and thus the forward inclination angle of the conveying plane, on the basis of the features of the pieces to be conveyed. Alternatively, in the case of types of small-section elongated pieces which may become entangled with one another, it is possible to oscillate the oscillating structure forward and backward to shuffle the small section pieces contained in the containment cradle and obtain an arrangement which facilitates their transfer onto the conveying plane.

Further features and advantages of the present invention will be more apparent from the following detailed description, made by way of non-limiting example, with reference to the accompanying drawings, in which:
figures 1 and 2 are perspective views, from different points of view, of a loading and singularizing system according to the present invention;
figures 3 to 5 are side elevation views showing the loading and singularizing system in figure 1, with an oscillating structure in a vertical position, a forwardly inclined position, and a rearwardly inclined position, respectively;
figures from 6 to 11 are enlarged views of a detail of the loading and singularizing system of figure 1, which show a driving member in different operating positions;
figures 12 to 14 are photographs of a display of the loading and singularizing system which show successive steps of movement of wide circular-section tubular pieces; and
figures 15 to 17 are photographs of a display of the loading and singularizing system which show successive steps of movement of slender circular-section tubular pieces.

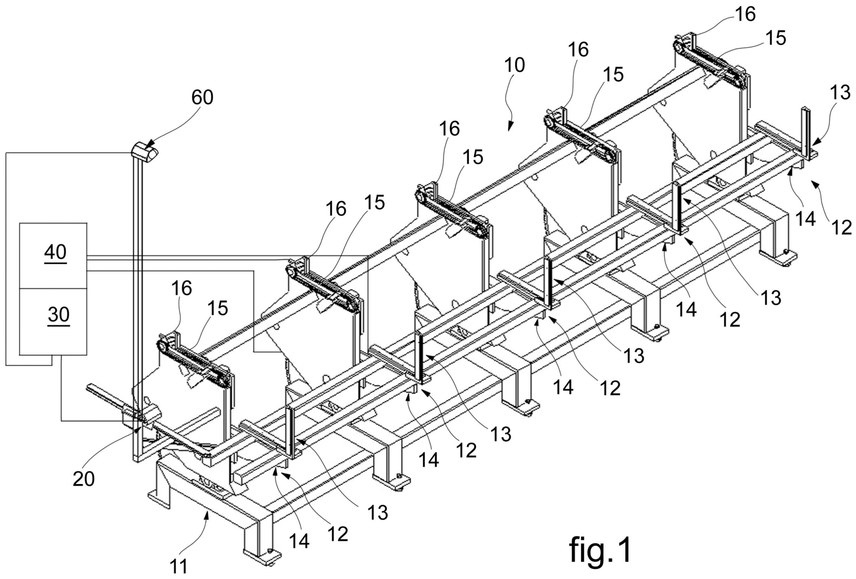

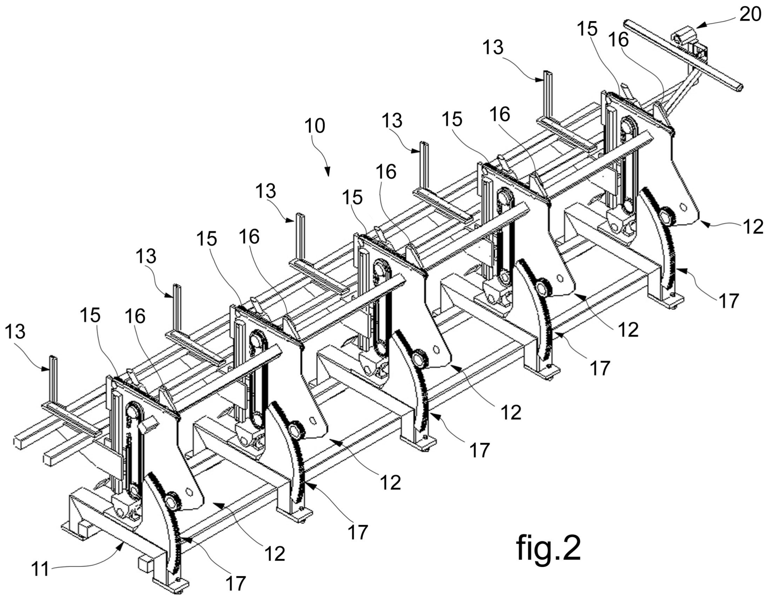

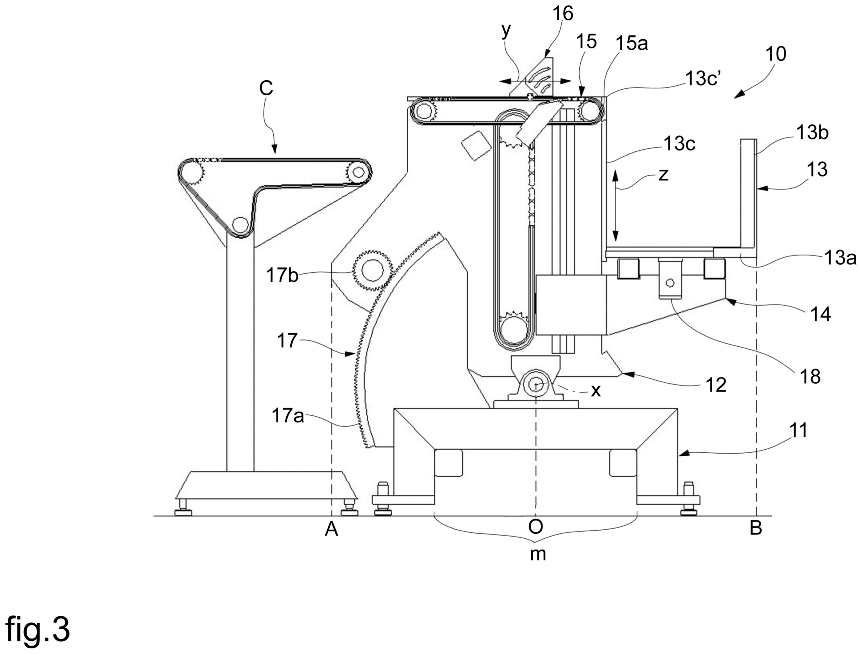

Figures from 1 to 5 show a loading and singularizing system 10 in a perspective view (figures 1 and 2) and in a side view (figures 3 to 5). In figures from 3 to 5, the loading and singularizing system 10 is shown in combination with a conveyor C (which will be described below) for transferring the elongated workpieces to a processing machine (not shown). On the side opposite to the conveyor, a picking system (not shown) is conventionally provided for transferring the elongated pieces from a store (not shown) to the loading and singularizing system 10. In the following description, spatial terms such as "front" and "rear" are used with reference to the direction in which the elongated workpieces are transferred from the store to the processing machine, i.e., from the right leftwards according to the representation in figures 3-5. In other words, the front side of the loading and singularizing system 10 is the one facing the conveyor/processing machine and from which the elongated workpieces exit, while the rear side is the opposite side, facing the store, and from which the elongated workpieces enter. The elongated pieces may be, for example, tubular pieces, bars, open- or closed-section profiles.

The loading and singularizing system 10 comprises a stationary support structure 11 and an oscillating structure (otherwise said tilting structure) 12 supported by the support structure 11. The rotation axis, about which the oscillating structure 12 is rotatable with respect to the support structure 11, is indicated by x.

The loading and singularizing system 10 further comprises a containment cradle 13 and a lifter 14 carried by the oscillating structure 12. The containment cradle 13 is configured to receive a plurality of elongated pieces P, shown in figures from 6 to 11. The lifter 14 is configured to lift the elongated pieces P contained in the containment cradle 13. In the example shown, the containment cradle 13 comprises a bottom 13a and a side 13b, which delimits the containment cradle 13 at the rear, and a wall 13c of the oscillating structure 12, which delimits the containment cradle 13 at the front. In the example shown, the bottom 13a and the side 13b of the containment cradle 13 are formed by a lattice structure (see figures 1 and 2). Furthermore, the lifter 14 is coupled to the containment cradle 13 so as to be capable of translating the movable part of the containment cradle 13 (i.e. the bottom 13a and the rear side 13b) along the wall 13c of the oscillating structure 12, in the direction indicated by arrow z in figures 3-5. According to an alternative embodiment, not shown, the containment cradle 13 may be fixed with respect to the oscillating structure 12. In this case, the lifter 14 could comprise a movable bottom platform arranged inside the containment cradle 13.

The loading and singularizing system 10 further comprises a conveying plane 15 carried by the oscillating structure 12 and having an end adjacent to a upper edge 13c' of the containment cradle 13 (i.e. the upper edge of the wall 13c of the oscillating structure 12). In the example shown, the conveying plane is orthogonal to the front side of the containment cradle 13, i.e., is orthogonal to the wall 13c of the oscillating structure 12.

The conveying plane 15 may comprise at least one driving member 16, e.g. a driving tooth, arranged in a manner movable along the conveying plane 15 in a conveying direction y, in such a way that the elongated pieces which are lifted by the lifter 14 beyond the upper edge 13c' of the containment cradle 13 and reach the conveying plane 15 can be conveyed in a controlled manner along the conveying plane 15.

In the example shown, the oscillating structure 12 is formed by a plurality of modules arranged side by side along the length of the loading and singularizing system 10. This construction allows the loading and singularizing system 10 to be configured based on the length of the elongated pieces which are to be processed by the system.

The loading and singularizing system 10 further comprises an actuation mechanism 17 for rotatably actuating the oscillating structure 12. The actuation mechanism 17 comprises a continuous-motion actuator or a stepper actuator. In the example shown, the actuation mechanism is a rack-and-pinion mechanism 17 and comprises an arcuate rack 17a integral with one of said support structure 11 and oscillating structure 12 (in the specific example shown, the arcuate rack 17a is integral with the support structure 11), and a motorized pinion 17b, which engages said arcuate rack 17a and is supported by the other of said support structure 11 and oscillating structure 12 (in the specific example shown, the motorized pinion 17b is supported by the oscillating structure 12). The arcuate rack 17a extends concentrically with the rotation axis x of the oscillating structure 12.

As may be observed in the figure 3, the projection onto a horizontal plane of the rotation axis x is preferably arranged in a central area m between the projection A on the horizontal plane of a frontmost point of the oscillating structure 12 in the vertical position and the projection B on the horizontal plane of a rearmost point of the oscillating structure 12 in its vertical position, in which the conveying plane 15 is arranged horizontally. "Central area" means, for the structure in the vertical position as shown in fig. 3, an area centered on the midpoint O between the projections A and B and having an extent smaller than the distance between the projections A and B on the horizontal plane of the pivot axis x, e.g. equal to half of the distance between the projections A and B.

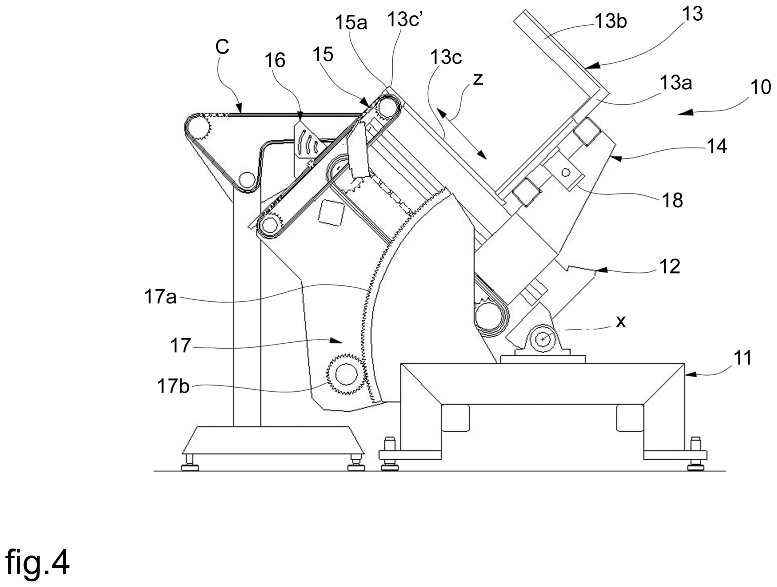

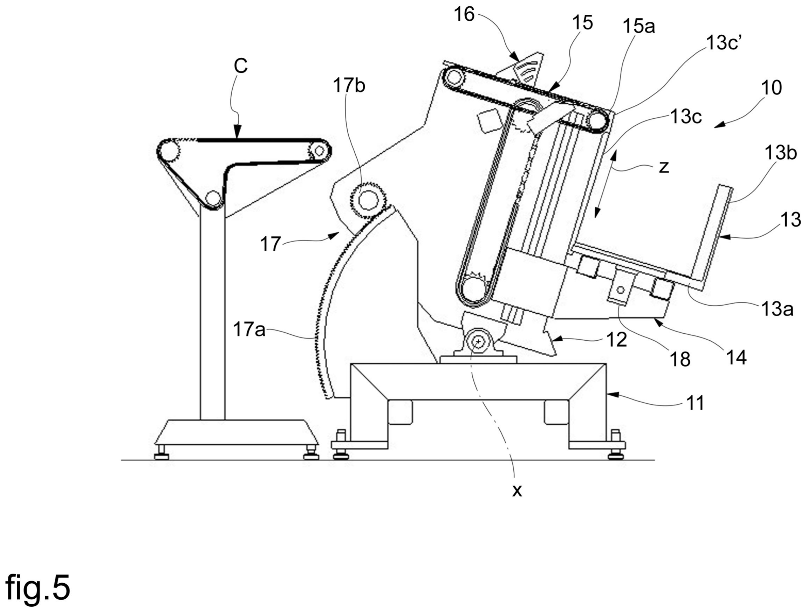

The oscillating structure 12 is rotatable, on the one hand, between the vertical position of figure 3 and a forwardly inclined position shown in figure 4, in which the conveying plane 15 is inclined and arranged below the upper edge 13c' of the containment cradle 13, and on the other, between the vertical position and a rearwardly inclined position shown in figure 5, in which the conveying plane 15 is inclined and arranged above the upper edge 13c' of the containment cradle 13. In other words, the oscillating structure 12 is capable of following a circumferential arc trajectory centered on the rotation axis x, and in which the point of the arc trajectory corresponding to the vertical position is arranged at a higher level than the extreme points reachable by the forwardly inclined position and the rearwardly inclined position. Such extreme points may, for example, correspond, respectively, to a forward inclination angle of +60° and more, and to a rearward inclination angle of -20° and more, measured with respect to the vertical.

The actuation mechanism 17 is configured so that the oscillating structure 12 can be position in a plurality of forwardly inclined positions and in a plurality of rearwardly inclined positions. In other words, the oscillating structure 12 does not move only from its vertical position to a single forwardly inclined position and vice versa, or from its vertical position to a single rearwardly inclined position and vice versa, but is capable of moving among multiple intermediate positions comprised between two extreme positions, as a function - as will be clarified below - of the type of elongated element to be processed and of the specific process conditions.

In figures from 3 to 5, the loading and singularizing system 10 is shown in combination with the conveyor C for transferring the elongated workpieces to a processing machine (not shown). In the example shown, the conveyor C is formed by a plurality of conveying modules arranged side by side along the length of the singularizing system 10. In figure 4, the oscillating structure 12 is in transfer position. This means that the oscillating structure 12 and the containment cradle 13 are rotated by an angle with respect to the horizontal, so that the lifter 14 can push a certain number of elongated pieces beyond the upper edge 13c' of the containment cradle 13 onto the forwardly inclined conveying plane 15. The number of pieces to be separated may be adjusted with precision by acting on the angle of the rotational movement of the oscillating structure 12, on the translation movement of the lifter 14 with respect to the oscillating structure 12, and on the translation movement of the driving member 16 with respect to the conveying plane 15. In the transfer position of figure 4, the forwardly inclined conveying plane 15 intersects with the horizontal transport plane defined by the conveyor C and made with endless conveyor means, e.g., a belt or a chain. Once the piece or pieces which are to be sent to the processing machine are on the forwardly inclined conveying plane 15, resting against the driving member 16, the movement of the driving member 16 toward the conveyor C allows the piece or pieces to fall along the inclined conveying plane 15 at a speed controlled by the movement of the driving member 16, until reaching the horizontal transport plane of the conveyor C. The arrangement of the inclined conveying plane 15 with respect to the horizontal transport plane of the conveyor C is such that, once a certain point in its translation movement along the conveying plane 15 has been passed, the driving member 16 is completely below the horizontal transport plane of the conveyor C, so as to allow the passage of the piece or pieces transported on the horizontal conveying plane of the conveyor C.

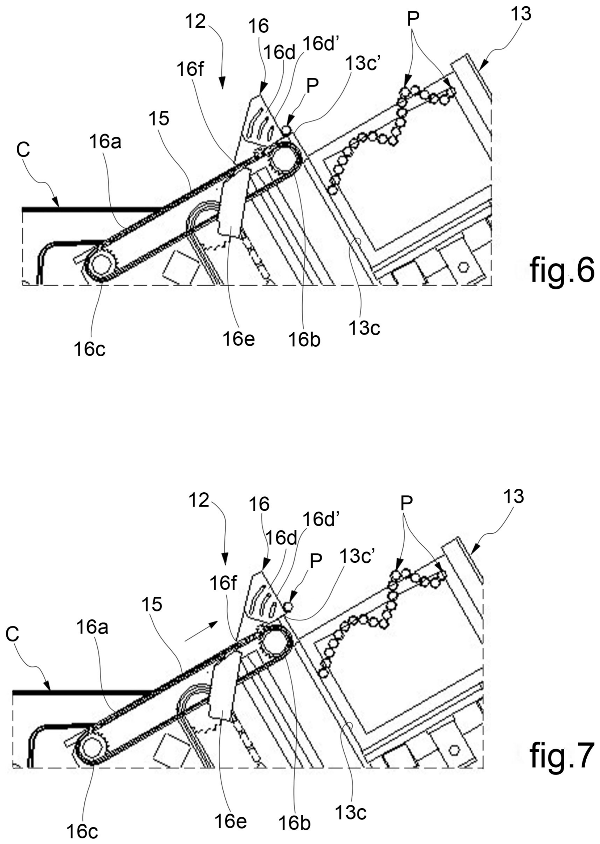

With reference to figures 6 to 11, the driving member 16 is fastened to endless transmission means 16a, e.g., a chain, which are in turn driven between a driving toothed wheel 16b and a driven toothed wheel 16c. The driving toothed wheel is in turn driven by a motor, not shown. The upper branch of the endless transmission means 16a is arranged parallel to the conveying plane 15 and slightly below it. The endless transmission means 16a allow a translation of the driving member 16 along the conveying plane 15. When the translation direction of the endless transmission means 16a and of the driving member 16 is oriented away from the upper edge 13c' of the containment cradle 13, the movement allows accompanying the pieces P arranged on the conveying plane 15 as described above. It is however possible to reverse the translation direction of the endless transmission means 16a and of the driving member 16 so that it is oriented toward the upper edge 13c' of the containment cradle 13, as shown in figure 7, in particular if it is necessary to reject the pieces P arranged on the conveying plane 15 into the containment cradle 13. Advantageously, the driving member 16 is capable of reaching an extreme position, in which the driving member 16 projects beyond the upper edge 13c' of the containment cradle 13. This arrangement makes it possible to facilitate the transfer of the pieces P into the containment cradle 13. Furthermore, if the friction between the pieces hinders the sliding of a single piece from the stack contained in the containment cradle 13, and raised so as to have a first layer of pieces beyond the level of the upper edge 13c' of the containment cradle 13, the application of a reciprocating movement to the driving member 16 projecting towards the containment cradle 13 may be useful to dislodge such pieces.

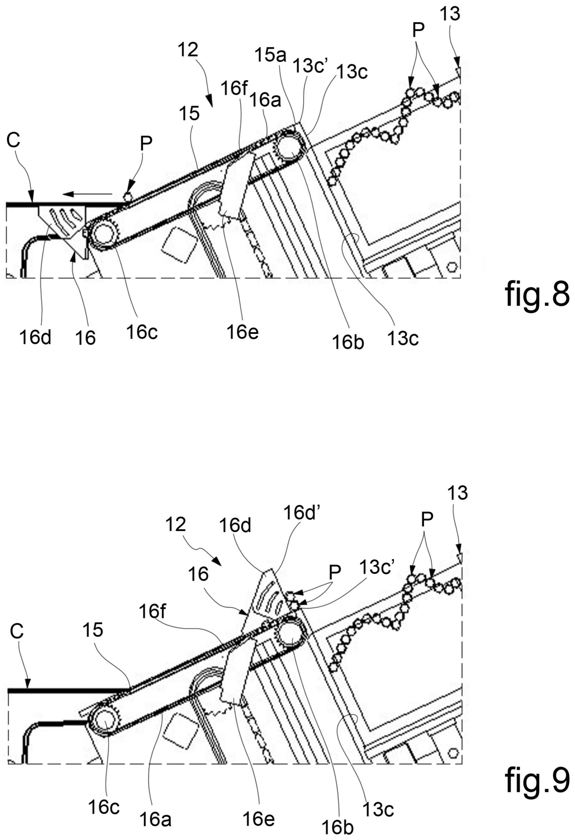

Figure 8 shows the driving member 16 which is tipped forward when the part of the endless transmission means 16a to which it is constrained passes over the toothed wheel 16c closest to the horizontal transport plane of the conveyor C. This tipping lowers the driving member 16 below the horizontal transport plane of the conveyor C, avoiding the driving member 16 from interfering with the pieces P transiting on the transport plane.

With reference to figures 9-10, the driving member 16 is equipped with an adjustable rest element 16d, which is mounted on the driving member 16 so as to provide the elongated pieces P with a rest surface 16d', the inclination of which with respect to the conveying plane 15 is adjustable. This inclination in the embodiment shown is manually adjustable, but in other embodiments the adjustment could be motorized. This expedient serves to avoid the situation, shown in figure 9, in which there are multiple pieces one on top of the other resting against the driving member 16. Indeed, this situation is undesirable because it hinders a controlled separation of the elongated pieces P. By adjusting the inclination of the rest element 16d so as to compensate for the inclination of the conveying plane 15, it is indeed possible to make the rest surface 16d' vertical or slightly overhanging, thus preventing multiple elongated pieces P from settling one on top of another.

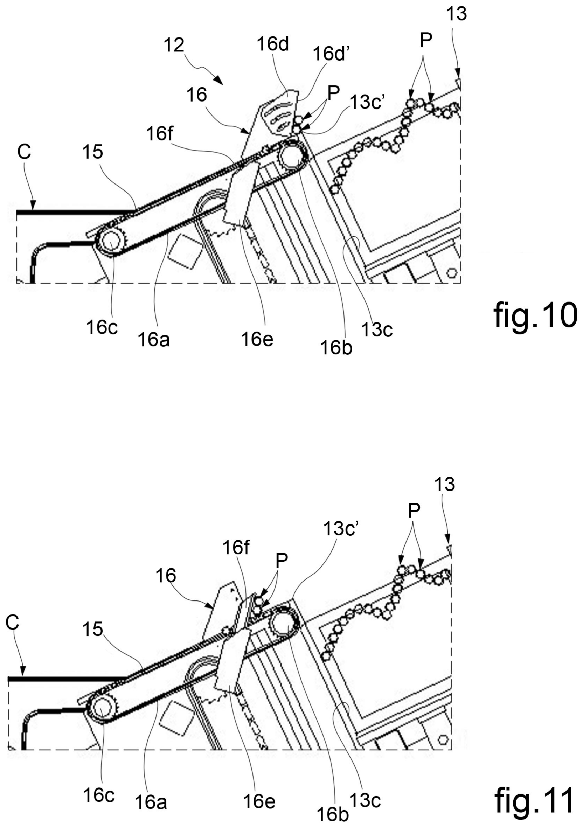

With reference to figure 11, an actuator 16e, also carried by the oscillating structure 12, is provided with a stop element 16f inclined with respect to the conveying plane 15 and capable of extending or retracting with respect to the actuator 16e. The stop element 16f is arranged so that, in its extended position, it protrudes beyond the conveying plane 15. The actuator 16e can be actuated to create an inclined barrier on the conveying plane 15. In this manner, if there are multiple elongated pieces P on top of one another other, resting against the driving member 16, if the driving member 16 is moved until it intersects the position of the stop element 16f, the inclined barrier causes the pieces positioned above to fall, which pieces are then positioned next to one another and no longer on top of one another, against the driving member 16.

The loading and singularizing system 10 may further comprise a plurality of vibratory members 18 mounted on the containment cradle 13 and/or on the lifter 14, and operable to apply a controlled vibration to the elongated pieces contained in the containment cradle 13. The use of such vibratory members may be advantageous for facilitating the movement/repositioning of the pieces within the containment cradle, in particular when the pieces are of materials with relatively high friction, which may slide with difficulty on one another or on the materials of the containment cradle 13. For example, if the pieces contained in the containment cradle 13 are aluminum tubes of square or rectangular section, the friction between the tubes could make it difficult for a single tube to slide from the stack contained in the containment cradle 13 and raised so as to have a first layer of tubes beyond the level of the upper edge 13c' of the containment cradle 13. If a controlled vibration is applied to the containment cradle 13 and/or to the lifter 14, this vibration is transmitted to the tubes, causing the detachment of the first piece of the stack, which comes to rest against the driving member 16. The inclination of the oscillating structure 12 must be adjusted so as to be sufficiently large for the action of the vibratory members to be effective, but not too large, so as to avoid the detachment of multiple tubes as a group. In greater detail, to overcome the static friction force by exploiting the gravitational force, a very high inclination would be required, with the consequence that many pieces would fall as a block: the application of controlled vibrations makes it possible to overcome the static frictions at a smaller angle, thereby making the loading of the tubes smoother.

The loading and singularizing system 10 may comprise a control system, in particular a control system based on artificial intelligence. At input level, this control system comprises image acquisition means 20, e.g., a camera, aimed at the containment cradle 13 and at the conveying plane 15. In the example shown, the image acquisition means 20 are integral with the oscillating structure 12. The image acquisition means 20 are adapted to acquire time-varying image sequences (e.g., videos) of the elongated pieces P in the containment cradle 13 and on the conveying plane 15 during their transfer from the containment cradle 13 to the conveying plane 15. The image acquisition means 20 are positioned so that, in the image sequences, the front ends of the elongated pieces P are visible. For example, the image acquisition means 20 are positioned at one end of the oscillating structure 12.

With reference to figure 1, the control system of the loading and singularizing system 10 further comprises electronic processing means 30, in particular with artificial intelligence, comprising a graphics processing unit and configured to receive in input the image sequences and assign sequential labels to the elongated pieces P depending on their position and on their probability of reaching the conveying plane 15. This probability is calculated and updated in real time based on parameters such as, for example, type and material of the elongated pieces P, position of the elongated pieces P in the containment cradle and on the conveying plane, position of the elongated pieces P with respect to one another, position of the moving parts of the loading and singularizing system 10. The electronic processing means 30 coupled to the image acquisition means 20 process the moving images in real time and make it possible to perform a frontal analysis of the entire bundle of pieces, by counting the pieces, measuring and verifying the section of the pieces, and measuring the position of the heads of the pieces in the image sequence. This makes it possible to verify the number of pieces on the driving member 16 and to verify the correct resting of the piece on the driving member 16 during the accompanying/conveying. In particular, the movement of the elongated workpieces P is tracked and monitored along the entire conveying plane 15. This is particularly useful, for example, in the case of elongated, slender and relatively flexible pieces, for which it is possible to verify that the piece does not rigidly follow the driving member 16 during the movement of the latter.

Control means 40 (e.g., a PLC) are coupled to the electronic processing means 30 and configured to control the movement of the oscillating structure 12, of the lifter 14 and/or of the conveyor member 16 depending on the positioning of the elongated pieces (or, in one embodiment, depending on the positioning of the sequential labels) with respect to the conveying plane 15 and to the conveyor member 16 in the image sequences being acquired. The control means 40 may further be configured for controlling the vibratory members 18, where present.

The processing and control units operate according to an artificial intelligence algorithm. The first function of such an algorithm is to collect the data originating from various tests, performed with pieces of different diameter, shape, and material under different stacking conditions in the containment cradle 13, during a step of learning.

Subsequently, the acquired data are processed and analyzed by the artificial intelligence. In this data processing step, the software will acquire the information and the data necessary for the completion of the subsequent step, i.e., the decision step.

In the decision step, the software compares and puts in relation the data in input with those present in a database stored in the system and determines an action.

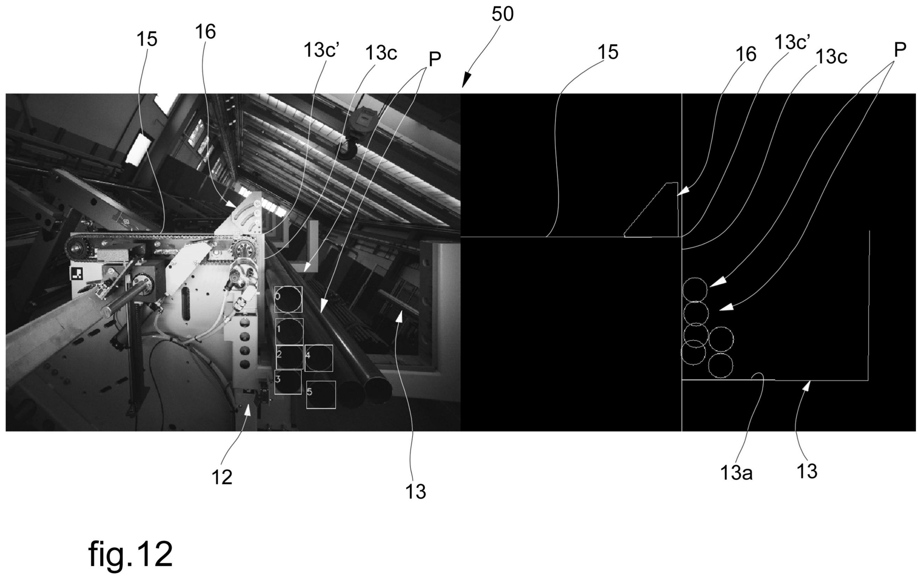

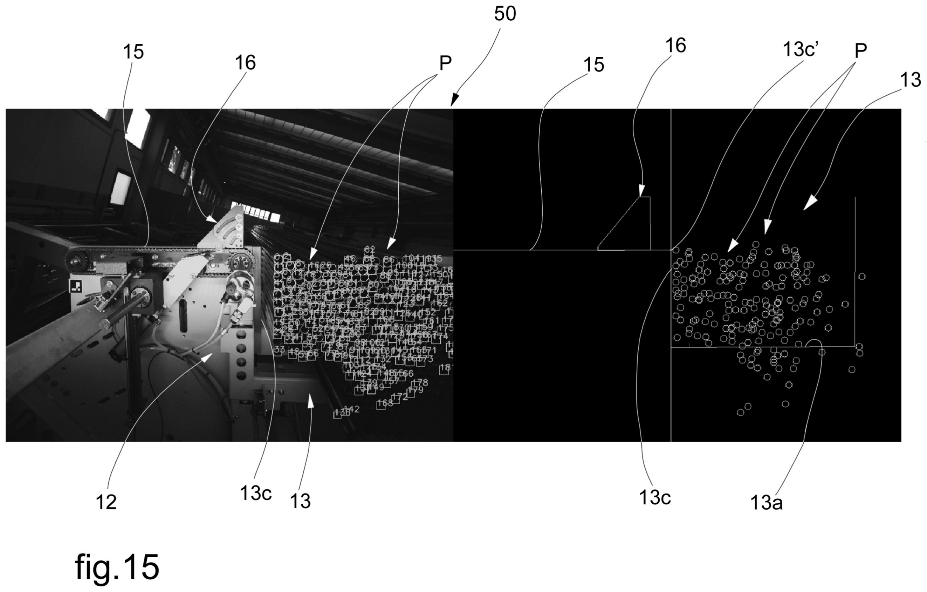

Figures 12 to 17 are photographs of a display 50 which shows the real-time video of an example of a singularizing process applied to a group of large diameter tubes (figures 12-14), and of an example of a singularizing process applied to a group of small diameter tubes (figures 15-17).

In these photographs, the left pane of the display 50 shows a control area which comprises the containment cradle 13 and the conveying plane 15 with the driving member 16. As can be seen in the figures, the respective front ends of the elongated pieces P are shown frontally and drawn in respective squares. To each tracked end/tube, the processing system assigns a respective sequential label depending on the position and on the probability of reaching the conveying plane 15. Therefore, label "0" is assigned to the tube closest/with greater probability and a correspondingly increasing label, "1", "2" and so on, is assigned to the other tubes in the containment cradle 13. The right-hand pane of display 50 displays a geometric reconstruction of the monitored elements: the front wall 13c of the containment cradle 13 with the upper edge 13c', the bottom surface of the containment cradle 13 or lifter 14, the tube profiles, the conveying plane 15, and the conductor 16. In the photographs, the inclination of the oscillating structure 12 is not perceptible, because, as mentioned before, in the indicated embodiment, the camera 20 is integral with the oscillating structure 12, and therefore the image reference system is integral with the latter.

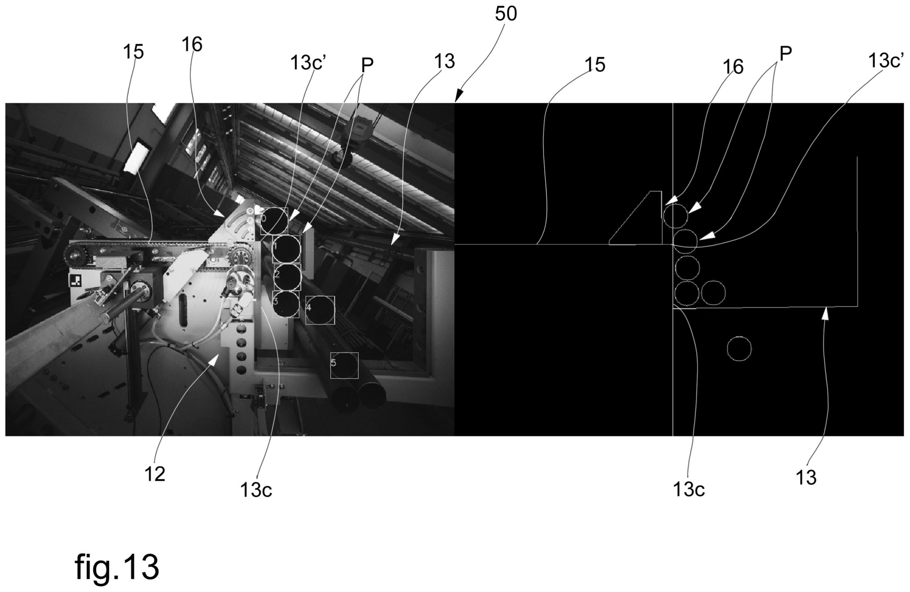

Figures 12 and 13 show that the containment cradle 13 is raised so as to bring a part of the tubes stacked therein above the level of the conveying plane 15. The labeling of the parts may change in a corresponding manner from one image to another.

Figure 13 shows that, by bringing the first layer of tubes completely above the level of the conveying plane 15, the equilibrium of the stack is broken. Therefore, due to the inclination of the oscillating structure 12, a piece tends to fall into the part of the conveying plane 15 delimited by the driving member 16, which is positioned at a distance from the upper edge 13c' of the containment cradle 13 less than the diameter of a single tube.

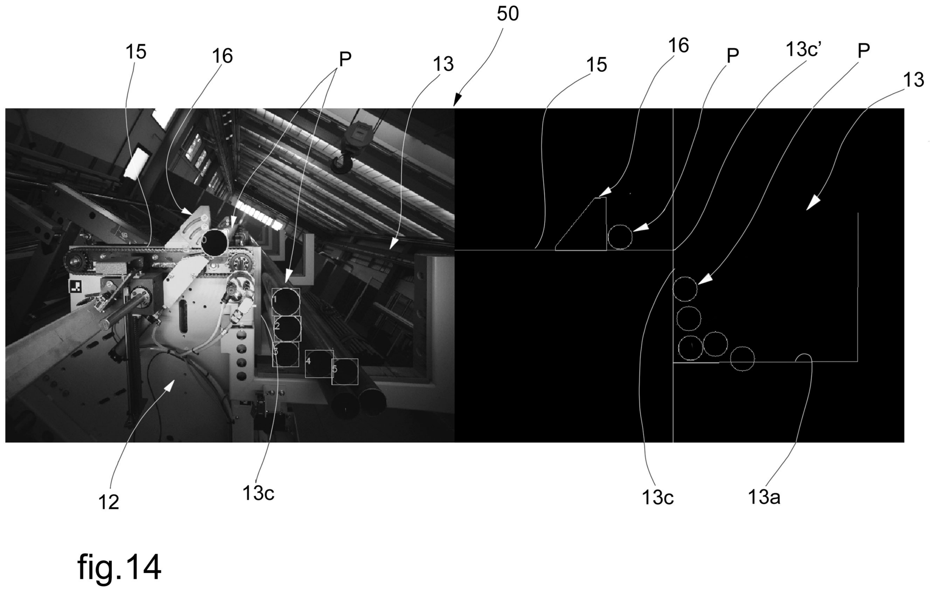

Figure 14 shows that, by retracting the driving member 16, the single piece falls onto the conveying plane 15 and rolls/slides along it, being accompanied by the driving member 16 in this movement. Simultaneously, by lowering the containment cradle 13, the other pieces are moved away from the conveying plane 15.

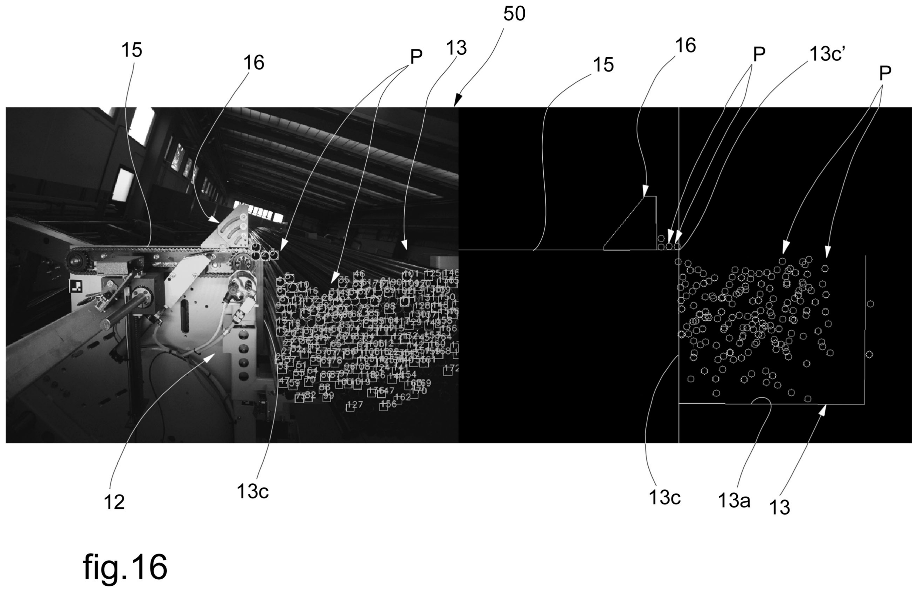

In another example, figures 15 and 16 show that the containment cradle 13 is raised so as to bring a part of the tubes stacked therein above the level of the conveying plane 15, to break the balance of the stack. Due to the inclination of the oscillating structure 12, some of the pieces fall into the part of the conveying plane 15 delimited by the driving tooth 16, which is positioned at a distance from the upper edge 13c' of the containment cradle 13 equal to several times the diameter of the single tube. This causes the tubes, which are slender and relatively flexible and therefore may exhibit a certain tendency to become entangled, to be arranged in series, parallel to one another, abutting against the driving member 16. By lowering the containment cradle 13, the other pieces are moved away from the conveying plane 15.

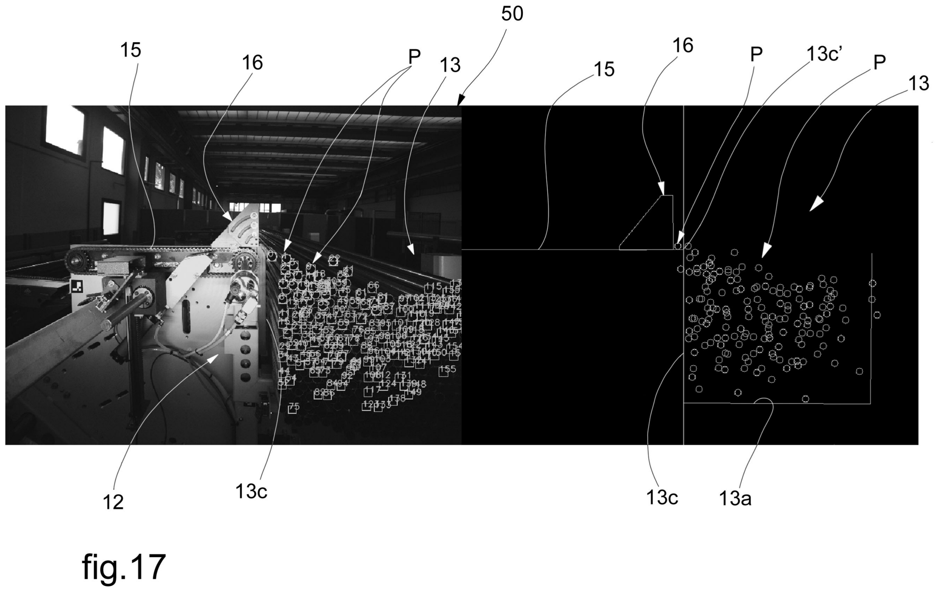

Figure 17 shows that, by moving the driving member 16 towards the upper edge 13c' of the containment cradle 13, all the pieces on the conveying plane 15, except one, are pushed back again into the containment cradle 13.

If it is not possible to arrange the pieces on the conveying plane 15 because they are excessively entangled in the containment cradle 13, the control system may decide to return all the pieces to the containment cradle 13 and actuate the motor of the oscillating structure 12 to cause it to oscillate in a reciprocating manner forward and backward, to induce a shuffling of the tubes.

Once the shuffling has been carried out, a subsequent attempt at singularizing may be carried out.

The loading and singularizing system 10 may comprise further image acquisition means in different positions to increase the amount of acquired information and to evaluate the best strategy for loading and singularizing efficiency improvement. In the illustrated embodiment, e.g., second image acquisition means 60 are provided (shown only in figure 1) adapted to acquire a sequence of lateral images (time-varying, e.g., videos) of the elongated pieces P. In the sequence of lateral images acquired by the second image acquisition means 60, respective lateral surfaces of the elongated pieces P are visible.

In the example described, only some of the possible optimization strategies for loading and singularizing are shown; it is however apparent that a system based on processing images by means of artificial intelligence, applied to the described oscillating structure, makes it possible to identify alternative optimization strategies as a function of the specific operating conditions and to choose the best, and therefore enables the creation of databases of such strategies which improve system learning so as to be able to continuously improve process efficiency.

For example, the system may allow the effective management of the chance that a nonconforming elongated piece is loaded, and indeed that it be suitably rejected into the containment cradle 13 recursively each time it is at the top of the stack, so as to load exclusively the conforming elongated pieces and leave in the containment cradle 13 the nonconforming pieces.

## Claims

1. A loading and singularizing system for the controlled separation of elongated pieces, the system comprising
a support structure (11),
an oscillating structure (12) supported by the support structure (11) and capable of rotating with respect to it,
a containment cradle (13) and a lifter (14) carried by the oscillating structure (12), the containment cradle (13) being configured to receive a plurality of elongated pieces (P), and the lifter (14) being configured to lift the elongated pieces (P) contained in the containment cradle (13), and
a conveying plane (15) carried by the oscillating structure (12) and having an end (15a) adjacent to an upper edge (13c') of the containment cradle (13),
wherein the oscillating structure (12) is rotatable between a vertical position, in which the conveying plane (15) is arranged horizontally, and a forwardly inclined position, in which the conveying plane (15) is inclined and arranged below the upper edge (13c') of the containment cradle (13),
the loading and singularizing system being **characterized in that** the oscillating structure (12) is further rotatable between the vertical position and a rearwardly inclined position, in which the conveying plane (15) is inclined and arranged above the upper edge (13c') of the containment cradle (13),
wherein the oscillating structure (12) is positionable in a plurality of said forwardly inclined positions and in a plurality of said rearwardly inclined positions by means of an actuating mechanism (17).

2. A loading and singularizing system according to claim 1, wherein the actuating mechanism includes a rack-and-pinion mechanism (17) for moving the oscillating structure (12), the rack-and-pinion actuating mechanism (17) comprising an arcuate rack (17a) integral with one of said support structure (11) and oscillating structure (12), and a motorized pinion (17b) which engages said arcuate rack (17a) and is supported by the other of said support structure (11) and oscillating structure (12).

3. A loading and singularizing system according to claim 1 or 2, wherein a rotation axis (x), about which the oscillating structure (12) is rotatable with respect to the support structure (11), has a projection on a horizontal plane arranged in a central area (m) between the projections (A, B) on the horizontal plane of a frontmost point and a rearmost point of the oscillating structure (12) in the vertical position.

4. A loading and singularizing system according to any of the preceding claims, wherein the oscillating structure (12) is capable of following a circumferential arc trajectory centered on the rotation axis (x), and wherein the point of the arc trajectory corresponding to said vertical position is arranged at a higher level than the extreme points reachable by the oscillating structure (12) in the forwardly inclined position and in the rearwardly inclined position.

5. A loading and singularizing system according to any of the preceding claims, wherein the conveying plane (15) includes at least one driving member (16) arranged in a manner movable along the conveying plane (15) in a conveying direction, in such a way that the elongated pieces (P) which are lifted by the lifter (14) beyond the upper edge (13c') of the containment cradle (13) and reach the conveying plane (15) can be conveyed in a controlled manner along the conveying plane (15).

6. A loading and singularizing system according to claim 5, wherein the driving member (16) is equipped with an adjustable rest element (16d), which is mounted on the driving member (16) in such a way as to provide the elongated pieces (P) with a rest surface (16d') whose inclination with respect to the conveying plane (15) is adjustable.

7. A loading and singularizing system according to any of the preceding claims, further comprising an actuator (16e) carried by the oscillating structure (12), which is provided with a stop element (16f) inclined with respect to the conveying plane (15) and capable of extending or retracting with respect to the actuator (16e), wherein the stop element (16f) is arranged such that in its extended position it protrudes beyond the conveying plane (15).

8. A loading and singularizing system according to any of the preceding claims, wherein the conveying plane (15) is orthogonal to a front side (13c) of the containment cradle (13).

9. A loading and singularizing system according to any of the preceding claims, further comprising
image acquisition means (20) aimed at the containment cradle (13) and at the conveying plane (15), said image acquisition means (20) being adapted to acquire a sequence of images of the elongated pieces (P) in the containment cradle (13) and on the conveying plane, respective front ends of the elongated pieces (P) being visible in the sequence of images,
electronic processing means (30) arranged to process said sequence of images, and control means (40) coupled to the electronic processing means (30) and arranged to control the movement of at least one of said oscillating structure (12), lifter (14) and driving member (16) based on said sequence of images.
